Europäisches Patentamt

European Patent Office

Office européen des brevets

(19)

(11) **EP 0 774 869 A2**

(12) **EUROPEAN PATENT APPLICATION**

(43) Date of publication:
21.05.1997 Bulletin 1997/21

(51) Int. Cl.⁶: **H04N 7/30**

(21) Application number: 96118208.6

(22) Date of filing: 13.11.1996

(84) Designated Contracting States:
DE FR GB

(30) Priority: 16.11.1995 JP 298768/95

(71) Applicant: HITACHI DENSHI KABUSHIKI KAISHA
Chiyoda-ku, Tokyo 101 (JP)

(72) Inventor: Miyashita, Atsushi
Tokorozawa-shi (JP)

(74) Representative: Altenburg, Udo, Dipl.-Phys. et al
Patent- und Rechtsanwälte,
Bardehle . Pagenberg . Dost . Altenburg .
Frohwitter . Geissler & Partner,
Galileiplatz 1
81679 München (DE)

(54) **Image data coding/decoding system**

(57) A coding apparatus (10) has a data compressor (15) for compressing input data under a given condition of compression to deliver compressed data, a detecting unit (6) for detecting a quantity of the compressed data, a designating unit (13) for designating a target compressed data quantity which is so set as to be less than, by a predetermined quantity, a maximum transmission data quantity of output data to be transmitted externally, a comparator (7) for comparing the target compressed data quantity with the detected compressed data quantity to deliver a comparison result, a setting unit (8) for setting a compression condition in accordance with the comparison result, and a limiter (14) for applying a comparison condition of a predetermined lower limit value to the compressor (15) when the set compression condition is less than a predetermined reference value.

FIG. 1

EP 0 774 869 A2

## Description

BACKGROUND OF THE INVENTION

The present invention relates to improvements in a coding/decoding system for coding/decoding compressed data.

JPEG (Joint Photographic Coding Experts Group) scheme is famous as a compression scheme of video signals.

The JPEG scheme is mainly classified into two types. One type is a lossless type having a feature that quality of an original image is completely maintained but an operation of constant compression factor cannot be insured. The other type is a lossy type which cannot completely maintain quality of an original image but can afford to provide a high compression factor. Generally, compression in the JPEG scheme is based on the lossy type. Originally, the JPEG scheme handles a still image as an object but the still image is taken for a state which is continuous at a rate of 60 fields/second or 30 frames/second and by sequentially performing the compression processing every field or every frame, the JPEG scheme can also be used for moving image compression. For simplifying explanation of data compression process, following description is referred to examples wherein the compression process is performed every field.

The JPEG scheme of the lossy type will further be described. The processing in the JPEG scheme consists of three stages of a DCT (Discrete Cosine Transform) processing, a quantizing processing and an entropy coding processing and marker addition.

In the first stage of DCT processing, the input image is divided into a plurality of small blocks each having 64 pixels including 8 pixels in a row and 8 lines in a column, and frequency analyzing is applied to each block. That is, the two-dimensional change of brightness value at each block is detacted as wave change, and frequencies forming this wave are determined. In this case, each block data is divided into 64 frequency components, and composition ratio of each frequency component is converted into 64 values of DCT coefficient to be outputted.

In the second stage of quantizing processing, each DCT coefficient generated by the DCT conversion processing is divided by a scale factor value (hereinafter referred to as SF value) for determining quantization resolution (compression ratio) in order that lower bits of the coefficient are cut off or rounded off and the coefficient is converted with rough accuracy.

In the third stage of entropy coding processing, a DCT coefficient value having a high generation frequency is converted into a short code expression and a DCT coefficient value having a low generation frequency is converted into a long code expression.

When DCT coefficients each having a value of "0" occur consecutively, by coding a number of consecutive coefficients of value "0", image data of 8 bits × 64 pixels can sometimes be expressed by a code of nearly several bits.

On the other hand, the coefficient value having the low generation frequency must be converted into a code of up to, for example, about 20 bits.

Accordingly, when the SF value is, for example, "1", the original input image data is of 8 bits × 64 pixels = 512 bits but at worst, it sometimes happens that a code of up to about 20 bits × 64 pixels = 1280 bits must be delivered.

A picture pattern having consecutive coefficient values of a low generation frequency is expressed by continuation of long codes. In an application to a moving image compression, in a case of the processing based on hardware, fetching of the input image must be stopped temporarily to perform entropy coding by reason of processing speed, so that the result that real time operation is sometimes difficult to achieve.

In the marker addition, specific codes indicative of the heading position and the end position of the prepared compressed data are added, and this addition is necessary from the viewpoint of the JPEG standards. No information is lost in the first stage of DCT processing and the third stage of entropy coding processing.

In the second stage of quantizing processing, however, by cutting off of the lower bits and rounding up processing by dividing operation of DCT coefficient information representative of small coefficients, for example, is lost and because of a failure to completely reconstruct the information, image quality is degraded during decoding.

Incidentally, the compression factor changes depending on the setting of SF value of the quantizing processing.

That is, essentially, with the quantizing setting for increasing the cut-off amount of lower bit by cutting of DCT coefficient with dividing operation to increase the SF value employed, the number of coefficients of value "0" increases and the remaining coefficient values also become small, so that coding of a high compression factor can be effected by virtue of the effect of entropy coding.

On the other hand, with the quantizing setting for decreasing the cut-off amount to decrease the SF value employed, the number of DCT coefficients of value "0" decreases and coefficients having large values remain, so that the decrease of information amount due to entropy coding is small and coding of a low compression factor can be effected. That is, when SF value is large, data quantity is decreased, and when

SF value is small, data quantity is increased.

Since the condition of generation of DCT coefficients differs with the state of an input image, the cut-off amount by quantizing changes as the picture pattern of the input image changes even if the quantizing setting is the same.

Namely, with the quantizing setting rendered to be constant, the data quantity changes depending on the picture pattern. When the quantizing setting is constant, the general relation between data quantity and picture pattern is held in which the data quantity is low for an simple image having many simple patterns without brightness change and conversely the data quantity is high for an image having many pattern variation and complicated pattern.

Essentially, the JPEG scheme is directed to an object of still image but as has already been described, when the still image is taken for a state which is continuous at a rate of 60 fields/second, it is used to an application of moving image compression in which the compression processing is consecutively carried out every field. In this case, the compressed data quantity changes greatly according to a pattern of input image with the quantizing setting fixed and there results a system which is unsuitable for any utilization of storage and transmission. A scheme capable of producing a substantially constant compressed data quantity regardless of the picture pattern is suitable for system construction. By taking the above into account, a JPEG chip incorporating the function to be described below has recently be developed.

The function is to compare a compressed data quantity prepared at one preceding field with a preset target data quantity and to change and deliver the quantizing setting as following example.

If compressed data quantity is larger than a target data quantity, the next SF value for next field is made to be larger by a value corresponding to the difference between the compressed data quantity and a target data quantity.

If compressed data quantity is equal to a target data quantity, the next field SF value made to remain unchanged.

If compressed data quantity is smaller than a target data quantity, the next field SF value is made to be smaller by a value corresponding to a difference between the compressed data quantity and target data quantity.

This SF value control modifies the SF value on the basis of a result of the compressed data quantity at the one preceding field to obtain the target compressed data quantity, that is, to reach the target compression factor.

Accordingly, if an object input video is a still image, the compression processing and the modification of SF value can be executed many times for the same picture pattern to reach the target compression factor without fail.

But when the object is a moving image, the processing is required to be carried out continuously and hence, temporal room cannot be insured for performing the compression processing a plurality of times for the same picture pattern.

In consequence, an image at the next field is compressed using a SF value modified on the basis of a result of compression at the preceding field. When the picture pattern changes between fields by a small amount, a substantial target compression factor can be obtained on the basis of the SF value modified based on a result at the preceding field. However, for example, when the scene changes and the picture pattern changes between fields by a large amount, a new picture pattern is compressed on the basis of a SF value determined based on a different picture pattern at the preceding field, so that a compressed data quantity results which greatly differs from the target compression data quantity.

So long as a complicated picture pattern changes to a simple picture pattern, SF value of preceding field is high, the simple image is compressed with a high compression ratio, and compressed data below the target data quantity is delivered, causing no substantially serious problem. On the other hand, when a simple picture pattern changes to a complicated picture pattern, SF value of preceding field is low, the complicated image is compressed with a low compression ratio, and compressed data in excess of the target data quantity is delivered.

In a system in which compressed data is transmitted within a predetermined period, the target data quantity is set to a maximum transmission rate of a data transmission path and therefore, when data in excess of the predetermined quantity occurs, the latter half of the compressed data cannot be transmitted. In a system in which compressed data is stored, the latter half of the compressed data cannot be stored.

As described above, in any of transmission and storage, all data pieces cannot become complete during decoding and an image cannot completely be decoded, resulting in an image collapse.

When many parts of picture are simple patterns but only a small part of the picture has a complicated picture pattern, total amount of the compressed data is small, and then the SF value has a small value. With the SF value decreased, the DCT coefficient is divided by a small divisor in quantization process to cause a large coefficient value to remain unchanged.

When the entropy coding is applied to the DCT coefficient with a low probability value corresponding to a complicated picture pattern in a very small part of the image, the data is converted into codes whose number of bits are larger than the number of input bits as mentioned above, the entropy coding takes time and the overall processing including DCT and quantization must be stopped temporarily.

Typically, one field of an inputted moving image has a period of 16.6 msec and a blanking period of about 1 msec. In the compression processing, however, a preparatory processing prior to a start of compressing process of the next field, for example, proceeds during the blanking period and temporal room is very small. Consequently, the aforementioned temporary stop liable to occur at a specified field takes place frequently and when the time for the total of temporary stop events exceeds the temporal room, all compressed data pieces at that field cannot be prepared within the temporal room and the processing at the next field cannot be started. As a result, a field dropout takes place and the processing of a pure moving image at a rate of 60 fields/second cannot be effected.

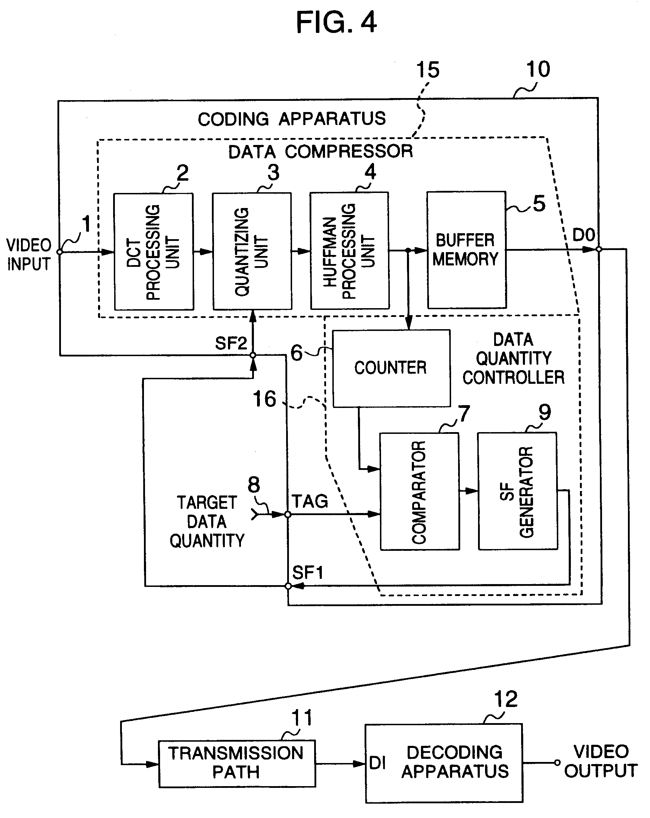

Referring to Fig. 4, the construction of the conventional coding apparatus is illustrated and the operation thereof will be described.

Data is coded in a coding apparatus 10, transmitted through a transmission path 11 and decoded in a decoding apparatus 12. The coding apparatus 10 mainly comprises a data compressor 15 and a data quantity controller 16, and SF1 and SF2 terminals of the coding apparatus 10 are connected to each other externally of the coding apparatus. A preset value of the previously-described target data quantity is applied to a terminal TAG. The target data quantity matches a maximum transmission rate of the transmission path 11.

Video input data is applied to a terminal 1 and inputted to a DCT processing unit 2. Aforementioned DCT coefficient obtained in the processing is inputted to a quantizing unit 3. A SF value from a SF generator 9 is also inputted to the quantizing unit 3 through the terminal SF2. A quantized DCT coefficient generated by aforementioned quantization process in the quantizing unit 3 is inputted to a Huffman processing unit 4 and is subjected to aforementioned entropy coding and marker addition. The length of a code delivered out of the Huffman processing unit 4 is not constant and therefore, the output from this processing occurs intermittently. Data undergoing the Huffman processing is inputted to a buffer memory 5 and a counter 6. The buffer memory 5 stores data within a predetermined period (at least one field period) as compressed data. The counter 6 calculates a value of a compressed data quantity of each field video. The value of the compressed data quantity obtained from the counter 6 is inputted to a comparator 7. A target data amount 8 is inputted to the other terminal of the comparator 7 through the terminal TAG.

The comparator 7 examines the magnitude relation between the two numerical values and changes the SF value generated in the SF generator 9 as follows. The initial SF value of SF generator 9 is set to a predetermined value at the start of operation.

If compressed data quantity is larger than a target data quantity, the SF value for next field is made to be large by a value corresponding to the difference between the two numerical values.

If a compressed data quantity is equal to a target data quantity, the SF value for next field is made to remain unchanged.

If a compressed data quantity is smaller than a target data quantity, the SF value for next field is made to be small by a value corresponding to the difference between the two numerical values.

The thus changed SF value is delivered to the terminal SF1.

The change of the SF value by the comparator 7 and SF generator 9 is not carried out during preparation of compressed data but is carried out during a period (blanking period) preceding compression at the next field following preparation of the compressed data.

The compressed data stored in the buffer memory 5 is delivered to the terminal DO for example at each field. The compressed data is inputted to a DI terminal of the decoding apparatus 12 through the transmission path 11 and decoded so as to be returned to a video signal which in turn is delivered.

Practically, interchange of clock signal and control signal is needed but this is well known in the art and will not be described.

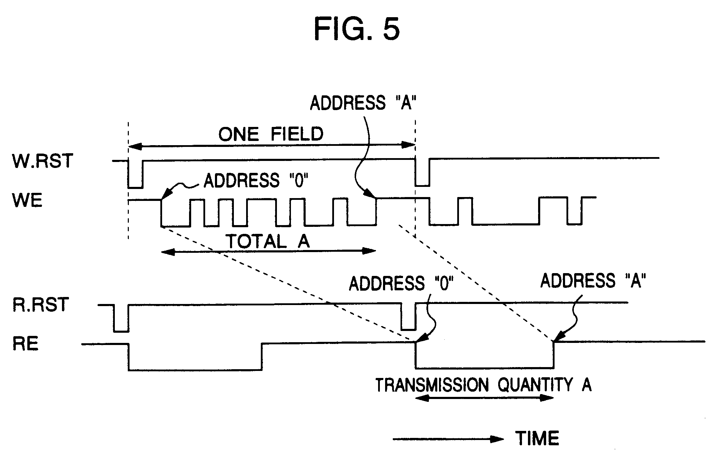

In the system of Fig. 4 for compressing, coding and transmitting a moving image, transmission of compressed data of an image for one field must be ended completely within a predetermined period and therefore, write and read of the compressed data is controlled by the buffer memory 5 utilized of a FiFo memory wherein read and write operations can be made at a same time. Control of access to the buffer memory 5 will now be described with reference to a waveform diagram of Fig. 5.

Firstly, in the case of write control, a write rest pulse WRST is applied to the buffer memory 5 at a period of one field interval at a timing immediately before start of preparation of compressed data of a one-field image. Each time that effective data is intermittently delivered from the Huffman processing unit 4 during the period of high level of the write reset pulse WRST, a write enable pulse WE of low level is applied to the buffer memory 5. In synchronism with the write enable pulse WE, output code data from the Huffman processing unit 4 is sequentially written to the buffer memory 5, starting with address 0 and ending in address A.

In the case of read control, a read reset pulse RRST is applied to the buffer memory 5 at a period of one field interval. During the data transmissive period, a read enable pulse RE of low level is applied to the buffer memory 5. Data is sequentially read out of the buffer memory 5, starting with address 0 and ending in address A, and delivered to the transmission path 11. The aforementioned write reset pulse WRST, write enable pulse WE, read reset pulse RRST and read enable pulse Re are delivered out of, for example, a timing generator not shown.

When the compressed data quantity generated in the data compression processing is less than the target A, for example, 0.6A, data of 0.6A is delivered out of the buffer memory 5, followed by delivery of data at the preceding field which has a data quantity of 0.4A and remains in the memory, but the latter data is not subjected to the decoding processing in the decoding apparatus 12. Conversely, when the quantity of the generated compressed data is greater than the target value A, amounting to, for example, 1.3A, data following 1.0A is not read out of the buffer memory 5 and the processing ends.

In the SF value control according to the conventional method, however, the latter half of the compressed data sometimes fails to be transmitted or stored when data greater than a predetermined quantity is generated.

Accordingly, necessary all data pieces cannot be become complete and an image cannot completely be reconstructed, resulting in an image collapse. Further, in the case of an image of a picture pattern which is simple as a whole but partly has a complicated picture pattern, the SF value takes a small value in order to obtain the target data quantity and the entropy coding processing for the complicated part of picture pattern becomes time-consuming, causing the overall operation to stop temporarily.

As a result, completion of compressed data is delayed even when the data quantity to be prepared is below the target quantity, resulting in disadvantages that the latter half of the image cannot be transmitted or recorded and an image collapse occurs frequently.

SUMMARY OF THE INVENTION

An object of the present invention is to realize a moving image coding/decoding system which can decrease a possibility that part of compressed data is lost even though the input image is changed and which can greatly decrease the frequency of occurrence of image collapse in transmission or storage of the compressed data.

A data coding apparatus according to the present invention has a data compressor for compressing input data under a given condition of compression to deliver compressed data, a detecting unit for detecting a quantity of the compressed data, a designating unit for designating a target compressed data quantity which is so set as to be less than, by a predetermined quantity, a maximum transmission quantity of output data to be transmitted externally, a comparator for comparing the target compressed data quantity with the detected compressed data quantity to deliver a comparison result, a setting unit for setting a compression condition in accordance with the comparison result, and a limiter for applying to the compressor a compression condition of a predetermined lower limit value when the set compression condition is less than a predetermined reference value.

Namely, according to an embodiment of the present invention, the compressed data quantity to be set as a target is so set as to be less than the maximum transmission quantity by a predetermined quantity, and furthermore a lower limit value Lu of a SF value for designating the compression condition in the quantizing processing is determined to a predetermined value, and the SF value is controlled such that the SF value always exceeds the lower limit value Lu.

Consequently, assuming the maximum compressed data quantity possible to be transmitted to or recorded is A and the predicted maximum change width from a normal image within a data variation occurred in each field due to a scene change or the like is ±H, the target compressed data quantity is set to A - H. Therefore, since the compressed data quantity always allows a margin of +H, the compressed data quantity outputted from the data coding apparatus does not exceed the maximum compressed data quantity A even if the compressed data quantity vary to +H, a collapse of the image is not caused. Further, by always controlling the SF value for determining compression condition to be no less than a predetermined lower limit value Lu (for example, a value close to the SF value for a normal image), even if an input image is changed to a complicated one from a simple one, the given SF value is close to the SF value for a normal image, and the complicated image is not compressed with a small SF value (low compression ratio) as the conventional coding apparatus. Accordingly, in a case that an input image is changed to a complicated image from a simple image, the input image can be compressed with the SF value (compression ratio) similar to the SF value used in a case that an input image is changed to a complicated image from a normal image, variation of SF value becomes small, variation range of the compressed data quantity is controlled within the value H, and then the frequency of image collapse is remarkably reduced.

Further, in a case that an input image has a picture pattern which is simple as a whole but partly has a complicated picture pattern, by controlling the SF value to be not less than the lower limit Lu, the partial complicated pattern is not compressed with SF value lower than the lower limit Lu, the entropy coding process does not take time, a temporary stop of the whole operation does not occur, and then the frequency of image collapse is remarkably reduced.

BRIEF DESCRIPTION OF THE DRAWINGS

Fig. 1 is a block diagram showing the overall construction of an embodiment of a data coding/decoding system of the present invention;
Fig. 2 is a block diagram of a scale factor limiter used in an embodiment of a coding apparatus of the present invention;
Fig. 3 is a block diagram of a target value converter used in the embodiment of the coding apparatus of the present invention;
Fig. 4 is a block diagram showing the overall construction of a general data coding/decoding system;
Fig. 5 is a waveform diagram for explaining the operation of a buffer memory used in the embodiment of the coding apparatus of the present invention; and
Fig. 6 is a block diagram of an example where part of the coding apparatus of the embodiment of the present invention is dealt with by a computer.

DESCRIPTION OF THE PREFERRED EMBODIMENTS

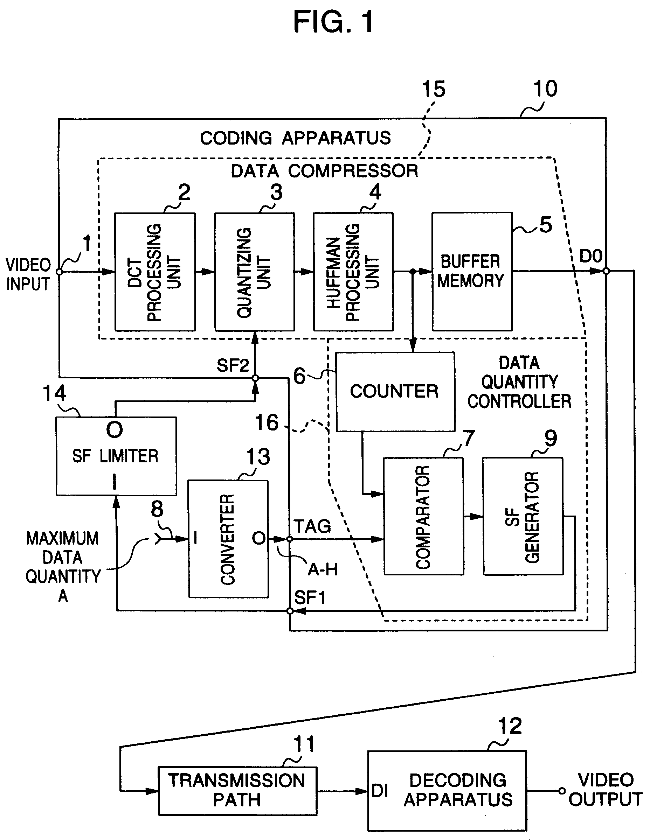

Referring to Fig. 1, an embodiment of a coding system realizing the present invention shown therein will now be described. In Figure 1, the elements indicated by the same reference numerals as used in Figure 4 implement same operations. Hereinafter, we will explain the embodiments of the invention mainly by referring to novel structure of the present invention shown in Fig. 1. A SF1 terminal of a coding apparatus 10 is connected to an I terminal of a SF limiter 14 to be described later. An O terminal of the SF limiter 14 is connected to a SF2 terminal of the coding apparatus 10. The maximum transmission data quantity 8 is inputted to an I terminal of a converter 13 to be described later the maximum transmission data quantity 8 represents the maximum value of the compressed data allowed to transmit through the transmission path or to record in the decoding apparatus. An O terminal of the converter 13 is connected to a TAG terminal of the coding apparatus 10. A DO terminal of the coding apparatus 10 is connected to a decoding apparatus 12 through a transmission path 11.

Given that the maximum transmission data quantity 8 is A and the maximum change width of an actual compressed data quantity estimated from a normal image is $\pm H$, the converter 13 converts the target data quantity to be applied to the TAG terminal of the coding apparatus 10 into A-H (H being a predictive maximum change quantity). Namely, a compressed data quantity to be set as a target is changed and set to, for example, a value which is lower than the compressed data quantity by its change quantity.

The SF limiter 14 determines a lower limit value Lu of SF value and always limits the SF value to a value which is larger than the lower limit value Lu (for example, a value close to the SF value for a normal image).

Next, the operation of individual components of the system shown in Fig. 1 will be described. The converter 13 provides to its O terminal a value A-H as a target compressed data quantity which is obtained by subtracting a value H of maximum change width of the actual compressed data quantity estimated from normal image from a value A of maximum transmission data quantity 8 inputted to its I terminal. The SF limiter 14 replaces a SF value calculated at the preceding field and inputted to its I terminal from SF generator 9 with a lower limit value Lu provided in SF limiter 14 and delivers a replaced value to its O terminal when the SF value is smaller than the value Lu determined as the lower limit. When the SF value is larger than the lower limit value Lu, the SF limiter provides to its O terminal the SF value inputted to its I terminal without limiting.

Next, the overall operation will be described. The coding apparatus 10 compresses an input video at an n-th field (n being an arbitrary positive integer) by using a value $SF_{n-1}$ which is a SF value at one preceding field inputted to the SF2 terminal and delivers compressed data to the DO terminal. In this phase, a counter 6 counts a compressed data quantity of the n-th field.

After the compression processing at the n-th field has ended, a comparator 7 of the coding apparatus 10 compares the compressed data quantity of the n-th field calculated by the counter 6 with the value A-H of target data quantity applied to the TAG terminal and outputs the value corresponding to the difference between the compared values and delivers to the SF1 terminal a value $SF_n$ which is a new SF value calculated by SF generator 9.

When the value $SF_n$ is larger than the lower limit value Lu (for example, a value close to the SF value for a normal image) provided in SF limiter 14, the SF limiter 14 provides the value $SF_n$, as it is, to its O terminal but when the value $SF_n$ is smaller than the lower limit value Lu, the SF limiter replaces the $SF_n$ with the lower limit value Lu which in turn is provided to its O terminal.

Then, the coding apparatus 10 performs the compression processing at the succeeding (n+1)-th field by using either the value $SF_n$ or the SF value which equals the lower limit value Lu.

An instance is now considered where an input image at an (m-1)-th field (m being an arbitrary positive integer) has a normal picture pattern and a SF value at that time is larger than the lower limit value Lu. It is then assumed that the picture pattern of the input image changes to a complicated picture pattern at an m-th field.

In this case, a standard value $SF_{m-1}$ obtained when the image of the normal picture pattern at the (m-1)-th field is processed is used as a SF value at the m-th field.

Accordingly, the compressed data quantity is increased at the most by a predictive change quantity of compressed data quantity which is about H and a total compressed data quantity amounts to A - H + H = A which never exceeds the maximum transmission data quantity A. Accordingly, generation of an image collapse can be prevented.

Since the compressed data quantity outputted at the m-th field is almost the maximum transmission data quantity as mentioned above and exceeds A-H of the target value, a SF value ($SF_m$) used for the data compression processing at the next (m+1)-th field is changed to a slightly larger value by a value corresponding to the difference H.

Then, the new SF value ($SF_m$) is used at the (m+1)-th field and therefore, compression process proceeds with a slightly higher compression ratio and the compressed data quantity is within A-H to keep the SF value unchanged.

In an instance where an image has a picture pattern which gradually changes to a simpler one, as the SF value from the SF1 terminal becomes smaller than the lower limit value Lu, the SF limiter 14 delivers a SF value which is replaced with the lower limit value Lu. Accordingly, even when part of the picture pattern is complicated, the SF value can be prevented from being unnecessarily excessively decreased and the compressed data quantity does not exceed the maximum A, with the result that the entropy coding processing does not come to a temporary stop.

In this case, a data quantity obtained in the compression processing at the next field does not reach the data quantity A-H inputted to the TAG terminal. In consequence, a SF value below the lower limit value Lu is again delivered and a similar processing is again repeated in the SF limiter 14.

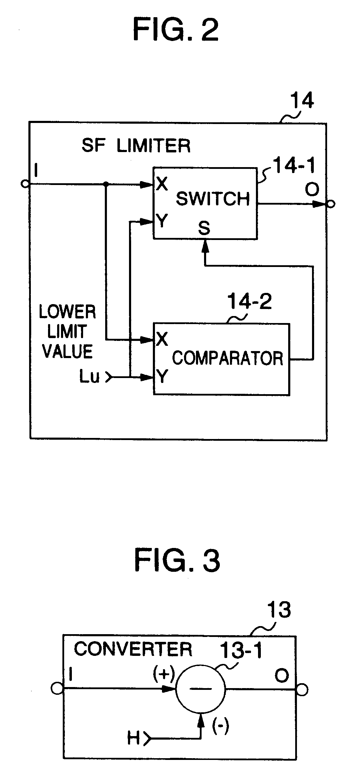

Referring now to Fig. 2, an embodiment of SF limiter 14 shown therein will be described.

The illustrated SF limiter includes a switch 14-1 and a comparator 14-2. The I terminal to which the SF value is inputted is connected to an X input terminal of the switch 14-1 and an X input terminal of the comparator 14-2. A Y input terminal of the switch 14-1 and a Y input terminal of the comparator 14-2 are applied with the lower limit value Lu. The output of the comparator 14-2 is connected to an S input of the switch 14-1. The output of the switch 14-1 is connected to the O terminal.

When logic "0" is inputted to the S input, the switch 14-1 delivers a Y input and when logic "1" is inputted, it delivers an X input. When X > Y, the comparator 14-2 delivers logic "1" and when X < Y, it delivers logic "0". As a result, the previously-described SF value limiting operation is carried out.

As a second embodiment of the SF limiter 14, utilization of a microcomputer can be considered. In this case, of a plurality of I/O port sets provided for the microcomputer, a first I/O port set is used as an I port which is connected to the I terminal. A second I/O port set is used as an O port which is connected to the O terminal.

By programming such a program that a data value (SF value) inputted to the I port of the first set is compared with the lower limit value Lu and in accordance with a comparison result, either the value at the first set as it is or the lower limit value Lu is delivered to the O port of the second set, the SF value limiting operation can be carried out.

Referring now to Fig. 3, an embodiment of converter 13 shown therein will be described.

The I terminal applied with the maximum transmission data quantity A is connected to a (+) input terminal of a subtractor 13-1. A value corresponding to a change H of the compressed data quantity is set at a (-) input terminal of the subtractor 13-1. With this construction, the A-H subtraction is effected by the subtractor 13-1 and the difference is delivered to the O terminal as the target data quantity.

While in the present embodiment the contents of the processing by the converter 13 is the subtraction processing, a multiplier for multiplying a value of less than 1.0 may be used to attain a similar effect.

As a second embodiment of the converter 13, a microcomputer can be utilized. It is easy for an up-to-date microcomputer having the improved throughput to deal with the processing of each of the SF limiter 14 and converter 13.

As the picture pattern change which increases the data quantity, the following three modes can be considered:

simple image → normal image,
normal image → complicated image, and
simple image → complicated image.

In a case that a simple image changes to a normal image or a normal image changes to a complicated image, the change of the data quantity will be approximately within +H. In such cases, since the compressed data quantity does not exceed the maximum value A, the image collapse can be avoided in the compression processing only by the converter 13 (where the target compressed data quantity is set to A-H) without using lower limit value Lu of the SF limiter 14.

In a case that a simple image changes to a complicated image, if the lower limit value is not set to SF value as same as a conventional processing, the change of the data quantity will be approximately +2H. However, according to the present invention, SF limiter 14 operates to limit the SF value for a simple image in a lower limit Lu, for example, a value close to the SF value for a normal image, and therefore the quantization of the image data is made with the lower limit SF value Lu. Accordingly, in a case that the input image is changed from a simple image to a complicated image, the compression process of the complicated image is made approximately with the SF value for the normal image, the variation of the compressed data quantity is within +H, the compressed data quantity finally outputted do not exceed the maximum transmission data quantity A, and then image collapse can be avoided.

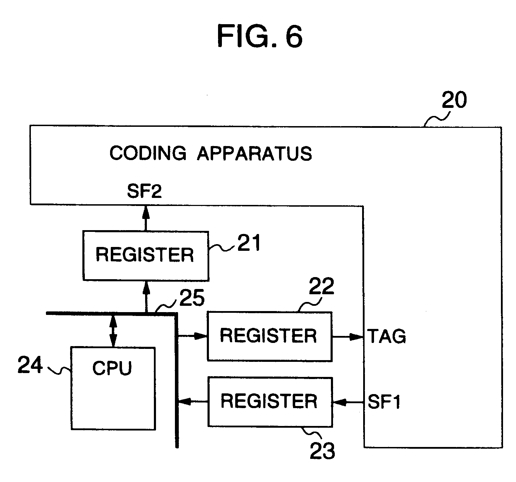

Referring now to Fig. 6, an embodiment will be described in which part of the function of the system shown in Fig. 1 is executed by a computer and a control program. In Fig. 6, reference numeral 20 designates the same component as the coding apparatus in Fig. 1 and its description will be omitted. TAG, SF1 and SF2 signal terminals are connected to a CPU bus 25 through registers 22, 23 and 21. A CPU 24 of the computer writes a target value (A-H) to the register 22 through the CPU bus 25 and delivers the value to the TAG terminal. Further, the CPU 24 fetches, through the register 23, a scale factor value delivered to the SF1 terminal. The CPU 24 compares the scale factor value with the lower limit value Lu and when the scale factor value is smaller than or equal to the lower limit value Lu, it writes the lower limit value Lu to the register 21 but when the scale factor value is larger than the lower limit value Lu, it writes the scale factor value fetched from the register 23, as it is, to the register 21. The CPU 24 accesses these registers during the vertical blanking period of image data and an interruption command informs this period to the CPU 24.

A buffer memory 5 is applied with access control similar to that in the system of Fig. 4 by means of the CPU 24.

An example of concrete numerical values applicable to the embodiments of the present invention will be shown below. In a case that coding and transmission is carried out under the condition that, for example, image data applied to an input terminal 1 of the coding apparatus 10 is of about 140 Mbps (2.35 Mbits per field) and the maximum transmission data quantity A of the transmission path 11 is about 20 Mbps (335 kbits per field), the value of the maximum change width H estimated from a normal image is set to 5 to 6 Mbps (67 to 84 Kbits per field), the target compressed data quantity A-H is set to 14-15 Mbps.

Further, in a case that the setting range of SF value is 1 to 65536, the lower limit value Lu of the SF value is set in a range approximately 50 to 100, and the target compressed data quantity is also set to 17 to 17.5 Mbps. When lower limit value Lu is not set and the target compression data quantity is set to 14 to 15 Mbps, the outputted compressed data having the image quality evaluated 9 points out of a possible ten can be obtained and probability of image collapse can be reduced less than 0.1%. When lower limit value Lu is set to the range 50 - 100 and the target compression data quantity is set to 17 to 17.5 Mbps, the outputted compressed data having the image quality evaluated 10 points can be obtained and probability of image collapse can be reduced less than 0.1%.

As described above, according to the present invention, in the coding/decoding system in which a moving image is coded, transmitted or recorded and thereafter decoded, the probability that the data quantity to be delivered exceeds a transmissive or recordable data quantity in the coding processing for producing compressed data from the moving image can be decreased to a great extent and the coding processing time can be prevented from increasing. As a result, a moving image coding/decoding system can be realized in which occurrence of the case where part of the compressed data is lost can be infrequent and the frequency of occurrence of an image collapse can be very small.

**Claims**

1. A data coding apparatus comprising:

    data compressing means (15) for compressing input data under a given condition of compression to deliver compressed data;
    means (6) for detecting a quantity of the compressed data;
    means (13) for designating a target compressed data quantity which is so set as to be smaller than, by a predetermined quantity, a maximum transmission quantity of output data to be delivered externally;
    means (7) for comparing said target compressed data quantity with the detected compressed data quantity to deliver a comparison result;
    means (8) for setting a compression condition in accordance with the comparison result; and
    limiter means (14) for applying a compression condition of a predetermined lower limit value to said compressing means (15) when said set compression condition is less than a predetermined reference value.

2. An apparatus according to claim 1, wherein said data compressing means (15) has a data quantizing unit (3), said compression condition is a scale factor value (SF) used when said quantizing unit (3) quantizes data, said means (8) for setting said compression condition sets a scale factor value in a direction in which the difference between the target compressed data quantity and the detected compressed data quantity decreases, and said limiter means (14) applies to said quantizing unit (3) said predetermined lower limit value (Lu) when the set scale factor value (SF) is smaller than or equal to the predetermined lower limit value (Lu) but the scale factor value (SF) when said set scale factor value (SF) is larger than the predetermined lower limit value (Lu).

3. An apparatus according to claim 2, wherein said data compressing means (15) further comprises a DCT coder (2) for delivering to said quantizing unit (3) a coefficient obtained by discrete-cosine-transforming said input data, and an entropy coder (4) for causing an output of said quantizing unit (3) to undergo the entropy coding processing, and said data quantity detecting means (6) is a counter for counting output data of said entropy coder (4).

4. An apparatus according to claim 3, wherein said input data is moving image data, the quantity of said compressed data is detected in a unit of one picture of the moving image data, and said compression condition is set every picture of the moving image data.

5. An apparatus according to claim 4, wherein said compression data quantity detecting means (6) detects a data quantity of compressed data at an n-th picture, n being an arbitrary positive integer, and said limiter means (14) applies a scale factor value (SF) for data at an (n+1)-th picture to said quantizing unit (3).

6. An apparatus according to claim 5 further comprising a buffer memory unit (5), wherein compressed data for one picture is written to said buffer memory unit (5) and externally read a predetermined data quantity corresponding to the maximum transmission quantity therefrom every picture.

7. An apparatus according to claim 1 further comprising a computer (24) operative in accordance with a program, wherein said computer performs designation of said target output data quantity and setting and limitation of said compression condition in accordance with the computer program.

8. A data coding/decoding system having a coding apparatus (10) for compressing and coding data, a transmission path (11) through which the coded data is transmitted at a predetermined transmission rate, and a decoding apparatus (12) for decoding the transmitted coded data, said coding apparatus (10) comprising:

data compressing means (15) for compressing input data under a given condition of compression to deliver compressed data;
means (6) for detecting a quantity of the compressed data;
means (13) for designating a target compressed data quantity which is so set as to be less than, by a predetermined quantity, a maximum transmission rate of said transmission path (11);
means (7) for comparing said target compressed data quantity with the detected compressed data quantity to deliver a comparison result;
means (8) for setting a compression condition in accordance with the comparison result; and
limiter means (14) for applying a compression condition of a predetermined lower limit value to said compressing means when said set compression condition is less than a predetermined reference value.

9. A system according to claim 8, said target compressed data quantity is so set as to be less than the maximum transmission rate of said transmission path by 10% or more.

10. A system according to claim 8, wherein said input data is moving image data, the quantity of said compressed data is detected in a unit of one picture of the moving image data, and said compression condition is set every picture of the moving image data.

11. A system according to claim 10, wherein said compression data quantity detecting means (6) detects a data quantity of compressed data at an n-th picture, n being an arbitrary positive integer, and said limiter means (14) applies a scale factor value (SF) for data at an (n+1)-th picture to said quantizing unit (3).

12. A system according to claim 11 further comprising a buffer memory unit (5), wherein compressed data for one picture is written to said buffer memory unit (5) and externally read a predetermined data quantity corresponding to the maximum transmission quantity therefrom every picture.

13. An apparatus according to claim 8 further comprising a computer (24) operative in accordance with a program, wherein said computer performs designation of said target output data quantity and setting and limitation of said compression condition in accordance with the computer program.

# FIG. 1

# FIG. 2

# FIG. 3

# FIG. 4

# FIG. 5

EP 0 774 869 A2

# FIG. 6